# EUROPEAN PATENT APPLICATION

(11) **EP 2 937 599 A1**
(43) Date of publication of application: **28.10.2015**
(21) Application number: 13864958.7
(22) Date of filing: 09.12.2013
(51) Int. Cl.: F16H 25/12, F16D 65/18, F16H 25/18

(54) **BALL-RAMP MECHANISM, LINEAR MOTION ACTUATOR, AND ELECTRIC DISC BRAKE DEVICE**

(30) Priority: 18.12.2012 JP 2012275656; 08.01.2013 JP 2013001000
(71) Applicant: NTN Corporation, Osaka-shi, Osaka 550-0003 (JP)
(72) Inventor: YASUI Makoto, Iwata-shi Shizuoka 438-0037 (JP); MURAMATSU Makoto, Iwata-shi Shizuoka 438-0037 (JP); SAOYAMA Yuki, Iwata-shi Shizuoka 438-0037 (JP)
(74) Representative: Grünecker Patent- und Rechtsanwälte PartG mbB
(86) International application number: PCT/JP2013/082959
(87) International publication number: WO 2014/097915

(57) **Abstract**

A ball ramp mechanism is configured such that a driving-side rotor (51) and a driven-side rotor (52) are located on the same axis in opposing relationship with each other; three sets of opposing paired arc-shaped ramp grooves (56, 57) are provided on each of the opposing faces of the two rotors (51, 52) at uniform intervals in the circumferential direction, with the depth thereof being changed gradually in the circumferential direction and the direction of the change being made opposite therebetween; a ball (53) is incorporated between each set of the opposing paired ramp grooves (56, 57); the balls (53) are retained by the cage (60); and flexibility is imparted to pillar sections (62) defined between pockets (61) of the cage (60) so as to make the pillar sections (62) elastically deformable; dimensional variations due to manufacturing tolerances of the ramp grooves (56, 57) are absorbed via elastic deformation of the pillar sections (62) so that each of the plurality of balls (53) is enabled to contact the ramp grooves (56, 57) uniformly.

## Description

### Technical Field

The present invention relates to a ball ramp mechanism for converting a rotary motion to a linear motion, and an electric or a manual linear motion actuator for linearly driving a driven member such as a brake pad using the ball ramp mechanism. Further, the present invention relates to an electric disc brake device using the electric linear motion actuator.

### Background Art

In an electric linear motion actuator using an electric motor as a drive source, a rotary motion of the rotor shaft of the electric motor is converted into a linear motion of a driven member, which is supported to be axially movable, by a motion converting mechanism.

As a motion converting mechanism used in an electric linear motion actuator, a ball ramp mechanism described in each of the below-identified Patent Documents 1 to 3 is known in the art. This ball ramp mechanism is configured such that: a driving-side rotor and a driven-side rotor are located on the same axis in opposing relationship with each other; three opposed pairs arc-shaped ramp grooves are provided on each of the opposing faces of the two rotors at intervals in the circumferential direction; and a ball is incorporated between each opposed pair of ramp grooves.

The depths of the ramp grooves are changed gradually in the circumferential direction, and the direction of the change is made opposite between the ramp grooves of the driving-side rotor and the ramp grooves of the driven-side rotor.

The ball ramp mechanisms described in Patent Documents 1 and 2 are configured such that: the driving-side rotor is rotated by the electric motor; and the balls are moved along the ramp grooves by rotation of the driving-side rotor relative to the driven-side rotor so that the driven-side rotor is moved in the axial direction.

The ball ramp mechanism described in Patent Document 3 is configured such that: the driving-side rotor is rotated by an operator depressing a pedal or manipulating a lever; and the balls are moved along the ramp grooves by rotation of the driving-side rotor relative to the driven-side rotor so that the driving-side rotor is moved in the axial direction.

### Prior Art Documents

### Patent Documents

Patent Document 1: Japanese Unexamined Patent Application Publication No. 2011-202696
Patent Document 2: Japanese Unexamined Patent Application Publication No. 2011-158058
Patent Document 3: Japanese Unexamined Patent Application Publication No. 2010-54038

### SUMMARY OF THE INVENTION

### Problem to Be Solved by the Invention

In the ball ramp mechanism described in any of Patent Documents 1 to 3, with a configuration in which balls are merely incorporated in the ramp grooves formed in the driving-side rotor and the driven-side rotor, a problem arises that the balls tend to be dispersed during assembly and disassembly of the ball ramp mechanism so that too much effort is taken in assembling and disassembling the ball ramp mechanism.

In order to solve such a problem, it is effective to retain the balls by a cage. In Fig. 1 of Patent Document 1, it is observed that a cage is illustrated although no reference numeral is assigned thereto.

The ramp grooves in the driving-side rotor and the driven-side rotor have dimensional variations such as in pitch, lead angle and the curvature of the arc-shape, of the ramp grooves, which comprise three opposed pairs of ramp grooves, due to manufacturing tolerances. Thus, in a uniform arrangement in which the three balls are located at uniform intervals in the circumferential direction, there is a tendency that the respective balls do not contact the ramp grooves uniformly and one of the balls may not make such contact. Further, a case may occur where due to wear of the ramp grooves, the balls become unable to contact the ramp grooves uniformly. In such a case, when the ball ramp mechanism is operated, a load may be applied thereto which tends to cause a delay or advance in the motion of the balls due to differences in the contact pressure.

When the cage has a high rigidity, a delay or advance in the motion of the balls is not permitted and thus the balls are forcibly retained in a uniform arrangement so that it may happen that some of the balls is out of contact with the ramp groove or there may be a tendency that the driving-side rotor and the driven-side rotor are relatively tilted so that a non-uniform load is imparted to the balls, thus causing abnormal wear or damage.

Further, a problem tends to arise that the contact pressure between the pockets of the cage and the balls builds up so that the operational efficiency of the ball ramp mechanism is decreased due to the sliding friction therebetween.

An object of the present invention is to make it possible to cause the individual balls to uniformly contact the ramp grooves even when there is a dimensional variation due to manufacturing tolerance in the ramp grooves of the ball ramp mechanism.

### Means for Solving the Problem

In order to achieve this this object, the present invention provides a ball ramp mechanism comprising a driving-side rotor and a driven-side rotor which are provided on a common axis in opposing relationship with each other, wherein a plurality of opposed pairs of circumferentially equidistantly spaced apart first and second arc-shaped ramp grooves are provided on opposing faces of the rotors, with depths of the ramp grooves being gradually changed in the circumferential direction and the direction of the change being made opposite between the first and second ramp grooves, balls each incorporated between each of the opposed pairs of ramp grooves, and a cage having pockets for accommodating the balls and retaining the balls, wherein the ball ramp mechanism is configured such that when the driving-side rotor and the driven-side rotor rotate relative to each other, the balls are moved along the respective ramp grooves such that the driving-side rotor and the driven-side rotor are relatively moved in an axial direction relative to each other, wherein pillar sections are defined between respective adjacent pairs of the pockets of the cage and flexibility is imparted to the pillar sections so as to make the pillar sections elastically deformable.

With flexibility being imparted to the pillar sections defined between the pockets of the cage, when a load is imposed such as to cause the plurality of balls to contact the ramp grooves non-uniformly because of dimensional variations due to manufacturing tolerances of the ramp grooves and to cause a delay or advance in the motion of the balls, the pillar sections are elastically deformed so that the dimensional variations due to manufacturing tolerances of the ramp grooves are absorbed and a delay or advance in the motion of the balls is permitted.

In this manner, each of the plurality of balls contacts the ramp grooves uniformly so that a load is transferred to each of the balls uniformly. Further, the surface pressure at the contact portion between the balls and the pockets is relieved via elastic deformation of the pillar sections so that the sliding friction due to the contact between the balls and the pocket is reduced; thus, it is possible to restrain a decrease in the operational efficiency of the ball ramp mechanism.

In order to impart flexibility to the pillar sections: cutout may be formed in the inner circumference of each of the pillar sections to make the radial widths of the pillar sections narrower than those of portions of the cage where the pockets are formed; the pillar sections may have radially inwardly curved shapes such that the pillar sections are smaller in radial width than the portions of the cage where the pockets are formed; the pillar sections may have the shape of bellows extensible and contractible in the circumferential direction such that the pillar sections are smaller in radial width than the portions of the cage where the pockets are formed; or a bored hole may be formed in the widthwise center portion of each of the pillar sections so as to divide the pillar section into an outer peripheral pillar portion and an inner peripheral pillar portion.

By imparting flexibility to the pillar sections as described, it is possible to achieve lightening of the cage as well as reduction of the material cost.

Further, when it is attempted to impart flexibility to the pillar section, the cage may be formed of a soft plastic material, or may be formed of copper or aluminum.

The present invention also provides an electric linear motion actuator comprising a cylinder, a piston that is slidable along an inside diameter surface of the cylinder, a drive shaft that configured to be rotationally driven by an electric motor serving as a drive source, and a ball ramp mechanism that converts a rotary motion of the drive shaft into a linear motion so as to press the piston, wherein the ball ramp mechanism comprises the ball ramp mechanism according to the present invention.

Further, the present invention provides a manual linear motion actuator comprising a cylinder, a piston that is slidable along an inside diameter surface of the cylinder, a push rod arranged coaxial with the piston so as to push the piston, and a ball ramp mechanism that is incorporated in back of the push rod and configured to convert an input rotation via manipulation by an operator into a linear motion so as to press the push rod, wherein the ball ramp mechanism comprises the ball ramp mechanism according to the present invention.

In either of the above electric and manual linear motion actuators, by employing the ball ramp mechanism according to the present invention, it is possible to realize a linear motion actuator with an enhanced load capacity and which is less susceptible to damage and hence has high durability.

The electric disc brake device as termed herein is applicable not only to a so-called service brake but also to an electric parking brake device when the service brake is of a hydraulic type.

The present invention also provides an electric disc brake device comprising an electric linear motion actuator, a disc rotor rotatable together with a wheel, and a brake pad configured to be linearly driven by the electric liner motion actuator, and pressed against the disc rotor, thereby applying a braking force to the disc rotor, wherein the electric linear motion actuator comprises the electric linear motion actuator according to the present invention.

### Advantages of the Invention

In the present invention, with flexibility being imparted to the pillar sections defined between the pockets of the cage, the pillar sections are elastically deformed so that dimensional variations due to manufacturing tolerances of the ramp grooves are absorbed, thereby it is possible to permit a delay or advance in the motion of the balls and cause each of the plurality of balls to contact the ramp grooves uniformly. In this manner, the ball ramp mechanism can be obtained which is less susceptible to damage at the contact portion between the balls and the ram grooves and hence has a high durability.

Further, the surface pressure at the contact portion between the ball and the cage pocket can be relieved via elastic deformation of the pillar section so that sliding friction due to contact between the ball and the pocket can be reduced and thus a decrease in the operational efficiency of the ball ram mechanism can be restrained.

In addition, the notched portion and the bored hole of the cage can accommodate a quantity of lubricant and thus serve as a lubricant reservoir so that the lubricity of the ball ramp mechanism can be enhanced so as to improve the operational efficiency and durability thereof.

### BRIEF DESCRIPTION OF THE DRAWINGS

Fig. 1 is a vertical sectional view of an electric linear motion actuator embodying the present invention;
Fig. 2 is an enlarged sectional view of a portion of Fig. 1;
Fig. 3 is a sectional view taken along the line III-III of Fig. 2;
Fig. 4 (A) is a sectional view taken along the line IV-IV of Fig. 2, and Fig. 4(B) is a sectional view illustrating an operating state;
Fig. 5 is a front view of a different cage;
Fig. 6 is a front view of a still different cage;
Fig. 7 is a front view of a further different cage;
Fig. 8 is a vertical sectional view of an electric disc brake device embodying the present invention;
Fig. 9 is a vertical sectional view of a different electric disc brake device embodying the present invention;
Fig. 10 is a sectional view of a different ball ramp mechanism;
Fig. 11 is a sectional view taken along the line XI-XI of Fig. 10;
Fig. 12(A) is a sectional view taken along the line VII-XII of Fig. 10, and Fig. 12(B) is a sectional view illustrating an operating state;
Fig. 13 is a vertical sectional view of a still different ball ramp mechanism;
Fig. 14 is a sectional view taken along ramp grooves of Fig. 13;
Fig. 15 is a front view of a different cage;
Fig. 16 is a vertical sectional view of a still different ball ramp mechanism; and
Fig. 17 is a sectional view taken along ramp grooves of Fig. 16.

### DESCRIPTION OF EMBODIMENTS

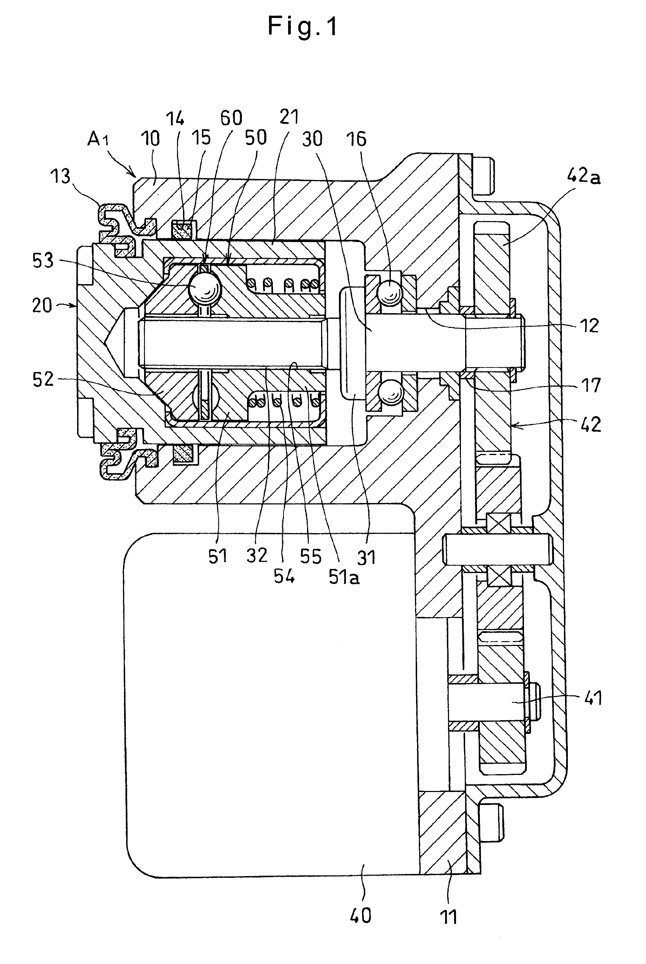

Embodiments of the present invention will be described based on the drawings hereinafter. Figs. 1 through 4 illustrate the electric linear motion actuator according to the present invention. As illustrated in Fig. 1, the electric linear motion actuator A1 includes a cylinder 10, a piston 20 incorporated in the cylinder 10, a drive shaft 30 located on the axis of the cylinder 10, an electric motor 40 for rotationally driving the drive shaft 30, and a ball ramp mechanism 50 for converting a rotational motion of the drive shaft 30 into a linear motion to press the piston 20.

The cylinder 10 is opened at one end and closed at the other end. A base plate 11 for supporting the electric motor 40 is provided on the closed end of the cylinder 10. Further, a shaft insertion hole 12 is formed in the closed end portion of the cylinder, and the rear end portion of drive shaft 30 is inserted through the shaft insertion hole 12. A gear type speed reducer 42 is provided between the rear end portion of the drive shaft 30 that faces the outside and the distal end portion of a rotor shaft 41 of the electric motor 40 that extends through the base plate 11 and faces the outside, and is configured to decelerate and transmit the rotation of the rotor shaft 41 to the drive shaft 30.

The piston 20 has a cylindrical portion 21, which is slidable along the inside diameter surface of the cylinder 10, and is incorporated in the cylinder 10 with the open end of the cylindrical portion 21 being forward. The piston 20 is incorporated in the cylinder 10 in such a manner that the distal end portion thereof faces the outside through the open end of the cylinder 10. An extensible and contractible bellows 13 is incorporated between the outer circumference of the distal end portion of the piston 20 and the open end portion of the cylinder 10 to close the open end of the cylinder 10, thereby preventing ingress of foreign substances into the cylinder 10.

Further, an annular seal groove 14 is formed in the inner circumference of the open end portion of the cylinder 10, and a seal member 15 is incorporated in the seal groove 14 in elastic contact with the outside diameter surface of the piston 20, thereby sealing between the sliding surfaces of the cylinder 10 and the piston 20.

A flange 31 is provided on the portion of the drive shaft 30 which is located in the closed end portion of the cylinder 10, and is rotatably supported by a thrust bearing 16 incorporated in the closed end portion of the cylinder 10. Further, a spacer 17 is incorporated between the closed end of the cylinder 10 and an output gear 42a of the speed reducer 42 on the rear end portion of the drive shaft 30 which is located outside from the closed end of the cylinder 10 so that the drive shaft 30 is supported by the spacer 17 so as to be prevented from moving in the axial direction.

The distal end portion of the drive shaft 30 is located in the cylindrical portion 21 of the piston 20, and has an external thread 32 formed on the outer circumference thereof.

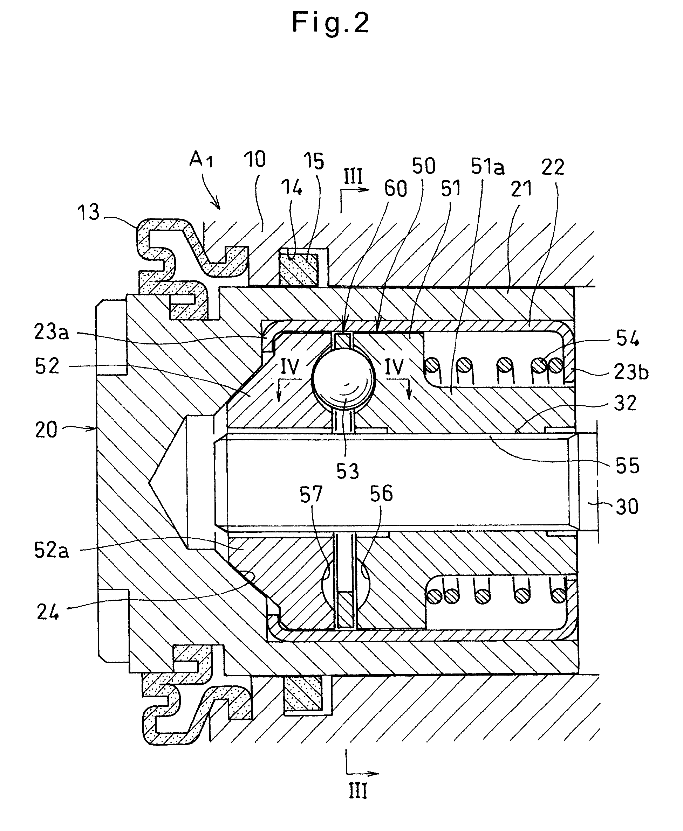

As illustrated in Fig. 2, a cylindrical casing 22 is incorporated in the cylindrical portion 21 of the piston 20. The casing 22 is rotatably mounted, having inward flanges 23a and 23b provided at the opposite ends thereof and a ball ramp mechanism 50 incorporated therein.

The ball ramp mechanism 50 includes an annular driving-side rotor 51, an annular driven-side rotor 52 located forward of the driving-side rotor 51 in opposing relationship therewith, balls 53 incorporated between the opposing portions of the rotors 51 and 52, a cage 60 retaining the balls 53, and an elastic member 54 incorporated between the driving-side rotor 51 and the inward flange 23b provided at the rear end of the casing 22 so as to bias the driving-side rotor 51 toward the driven-side rotor 52.

The driving-side rotor 51 has a boss portion 51a on the side away from the driven-side rotor 52 and is provided on its inner circumference with an internal thread 55 which is in threaded engagement with the external thread 32 of the drive shaft 30.

The driven-side rotor 52 is fitted over the outer circumference of the fore end of the drive shaft 30 with a gap maintained therebetween. Further, the outer diameter of the driven-side rotor 52 is made slightly smaller than the inner diameter of the casing 22 so that the outer circumferential portion of the fore end surface of the driven-side rotor 52 is disposed in axially opposing relationship with the inward flange 23a located at the fore end of the casing 22.

Further, a conical protrusion 52a is provided on the distal end surface of the driven-side rotor 52, and the conical protrusion 52a is fitted in a conical recess portion 24 formed on the closed end surface of the piston 20 in surface contact with the recess portion 24.

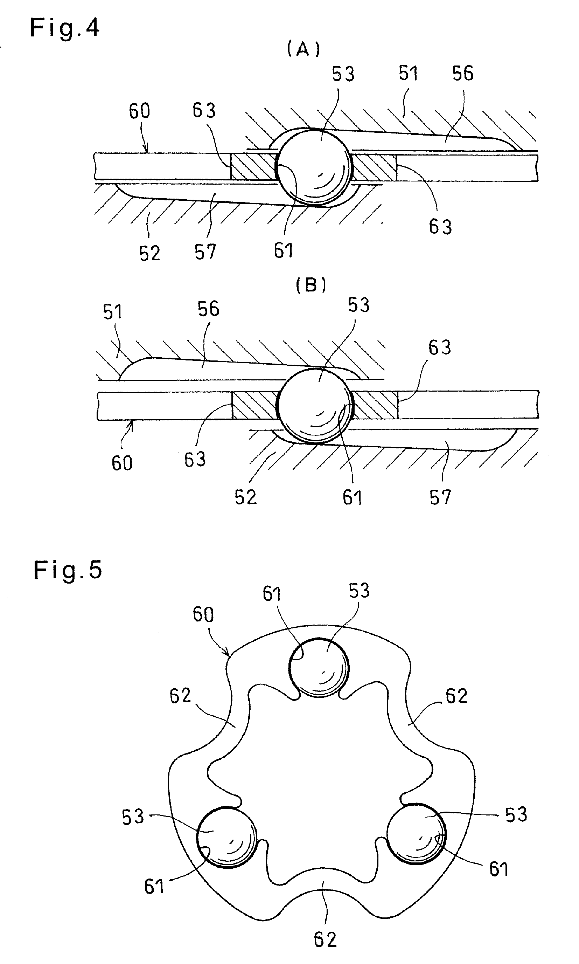

As illustrated in Figs. 2, 4(A) and 4(B), three opposed pairs of arc-shaped ramp grooves 56 and 57 are provided in the opposing faces of the driving-side rotor 51 and the driven-side rotor 52 at uniform intervals in the circumferential direction, and each ball 53 is incorporated between one of the three opposed pairs ramp grooves 56 and 57.

The depths of the ramp grooves 56 and 57 are changed gradually in the circumferential direction, and the direction of the change is opposite between the ramp grooves 56 of the driving-side rotor 51 and the ramp grooves 57 of the driven-side rotor 52.

The ramp grooves 56 and 57 are arc-shaped grooves, and are in contact with the balls 53.

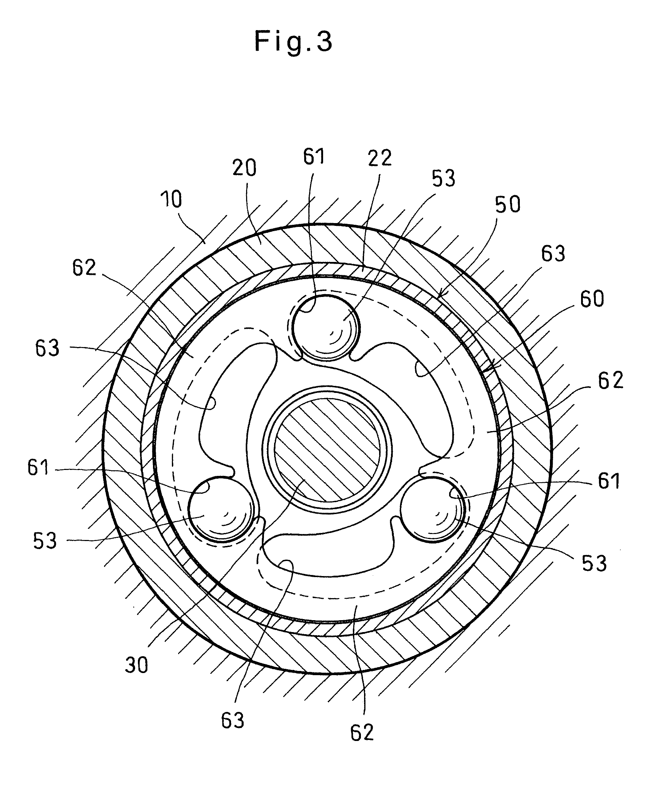

As illustrated in Fig. 3, the cage 60 has an annular shape. The cage 60 is provided with three pockets 61 arranged at uniform intervals in the circumferential direction and each accommodating one of the three balls 53. Between each adjacent pair of the pockets 61, there is defined a pillar section 62 having a cutout 63 formed in the inner circumference thereof. The cutouts 63 reduce the circumferential widths of the pillar sections 62 and thus increase flexibility of the pillar sections 62, thus permitting the balls 53 to move in the circumferential direction due to elastic deformation of the pillar sections 62 in the radial direction.

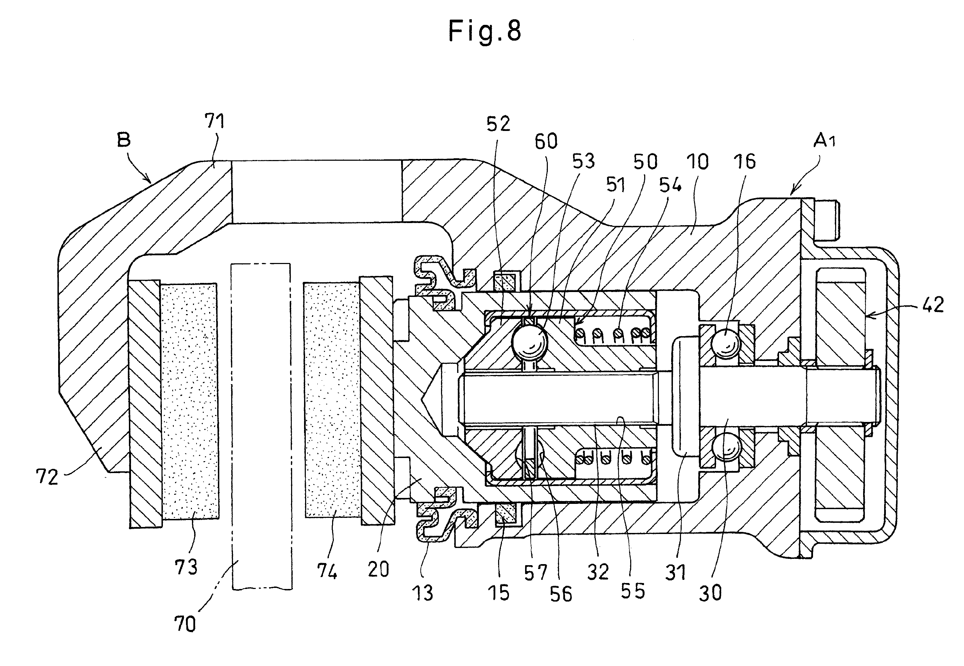

The electric linear motion actuator A1 illustrated in the embodiment is structured as described above, and Fig. 8 illustrates an electric disc brake device B which uses the electric linear motion actuator A1. In the electric disc brake device B, a caliper 71 is located around the outer peripheral portion of a disc rotor 70 that rotates with a wheel (not illustrated). A claw portion 72 is provided at one end of the caliper 71 in axially opposing relationship with the outer peripheral portion of the outboard face of the disc rotor 70. The claw portion 72 supports an outboard brake pad 73.

Further, the cylinder 10 of the electric linear motion actuator A1 is integrally provided at the other end of the caliper 71, with the piston 20 being located in axially opposing relationship with the outer peripheral portion of the inboard face of the disc rotor 70. An inboard brake pad 74 is provided at the distal end of the piston 20.

The caliper 71 is supported by a holder (not illustrated) supported by a stationary member such as a knuckle so as to be movable axially of the disc rotor 70.

The electric disc brake device B can be used both as a service brake and as a parking brake. By supplying hydraulic oil to the piston 20, this brake device B can be used as a hydraulic service brake. In this case, the electric linear motion actuator A1 serves as an electric parking brake.

In the state of use of the electric linear motion actuator A1 for the electric disc brake device B illustrated in Fig. 8, when the electric motor 40 illustrated in Fig. 1 is driven, the rotation of the rotor shaft 41 of the electric motor 40 is decelerated by the speed reducer 42 and transmitted to the drive shaft 30 so that the drive shaft 30 is rotated at a reduced speed.

Since the internal thread 55 of the driving-side rotor 51 is threaded engagement with the external thread 32 of the drive shaft 30, and the inboard brake pad 74 is out of contact with the disc rotor 70 so that no axial load acts on the piston 20, the driving-side rotor 51 is moved in the axial direction by the rotation of the drive shaft 30. The driven-side rotor 52 is also moved in the axial direction along with the driving-side rotor 51 to press the piston 20 so that the piston 20 is moved toward the disc rotor 70.

The movement of the piston 20 results in the inboard brake pad 74 being brought into abutment with the disc rotor 70, thus starting to press the disc rotor 70 in the axial direction. The reaction force to the pressing force acts on the driving-side rotor 51 through the piston 20 and the driven-side rotor 52 so that the contact pressure at the screw-engaging portion between the internal thread 55 and the external thread 32 builds up gradually.

The above reaction force acts on the drive shaft 30 through the thread engagement portion and is then applied from the drive shaft 30 to the cylinder 10, so that the caliper 71 is moved in the direction in which the outboard brake pad 73 attached to the claw portion 72 approaches the disc rotor 70, until the outboard brake pad 73 abuts the disc rotor 70.

Meanwhile, due to the increase of the contact pressure between the external thread 32 and the internal thread 55, the driving-side rotor 51 is rotated along with the drive shaft 30. This causes the driving-side rotor 51 to be rotated relative to the driven-side rotor 52, so that each of the balls 53 illustrated in Fig. 4(A) is moved from the deep groove portions of the ramp grooves 56, 57 toward the shallow groove portions as illustrated in Fig. 4(B).

Due to the motion of the balls 53 along the ramp grooves 56 and 57, the driving-side rotor 51 is moved against the elasticity of the elastic member 54 away from the driven-side rotor 52 so that the distance therebetween increases. As a result, the outboard brake pad 73 and the inboard brake pad 74 hold the outer peripheral portion of the disc rotor 70 strongly therebetween from the opposite sides in the axial direction, thereby applying a braking force to the disc rotor 70.

In this ball ramp mechanism 50, which converts the rotary motion of the drive shaft 30 into a linear motion of the piston 20, the ramp grooves 56 and 57 in the driving-side rotor 51 and the driven-side rotor 52 have dimensional variations such as in pitches, lead angles, and curvatures of the arc-shapes, of the three opposed pairs of ramp grooves 56 and 57, due to manufacturing tolerances. Thus, the three balls 53, which are located at uniform intervals in the circumferential direction, do not contact the respective ramp grooves 56 and 57 uniformly, or one of the balls 53 may not contact the respective ramp grooves 56 and 57 at all. Further, a case may occur where due to wear of the ramp grooves 56 and 57, the balls 53 become unable to contact the ramp grooves 56 and 57 uniformly. In such a case, when the ball ramp mechanism 50 is operated, a load may be applied thereto which tends to cause a delay or advance in the motion of the balls 53 due to differences in the contact pressure.

In the present embodiment, the cage 60 is structured such that the cutouts 63 are formed in the inner circumferences of the pillar sections 62 defined between the pockets 61 to thereby impart flexibility to the pillar sections 62, and thus, when a load that tends to cause a delay or advance in the motion of the balls 53 is applied as described hereinabove, the pillar sections 62 are elastically deformed in the radial direction so that the dimensional variation of the ramp grooves 56, 57 due to manufacturing tolerance is absorbed and thus a delay or advance in the motion of the ball 53 is permitted.

In this manner, each of the plurality of balls 53 is enabled to make uniform contact with the ramp grooves 56 and 57 so that the load can be uniformly transferred by the balls 53 and thus damage can be prevented from occurring at the contact portions between the balls 53 and the ramp grooves 56 and 57.

Further, due to the elastic deformation of the pillar sections 62, the surface pressure at the contact portions between the balls 53 and the pockets 61 can be relieved so that the sliding friction due to the contact between the balls 53 and the pockets 61 is reduced, thereby it is possible to restrain a decrease in the operational efficiency of the ball ramp mechanism 50.

While the cage 60 illustrated in Fig. 3 is structured such that flexibility is imparted to the pillar sections 62 defined between the pockets 61 with the cutouts 63 being formed in the inner circumferences of the pillar sections 62, the structure for imparting flexibility to the pillar sections 62 is not limited thereto.

Figs. 5 through 7 illustrate different structures for imparting flexibility to the pillar section 62. In Fig. 5, the cage 60 is structured such that the pillar sections are formed in radially inwardly curved shapes having radial widths narrower than those of the portions forming the pockets 61, thereby imparting flexibility to the pillar sections 62.

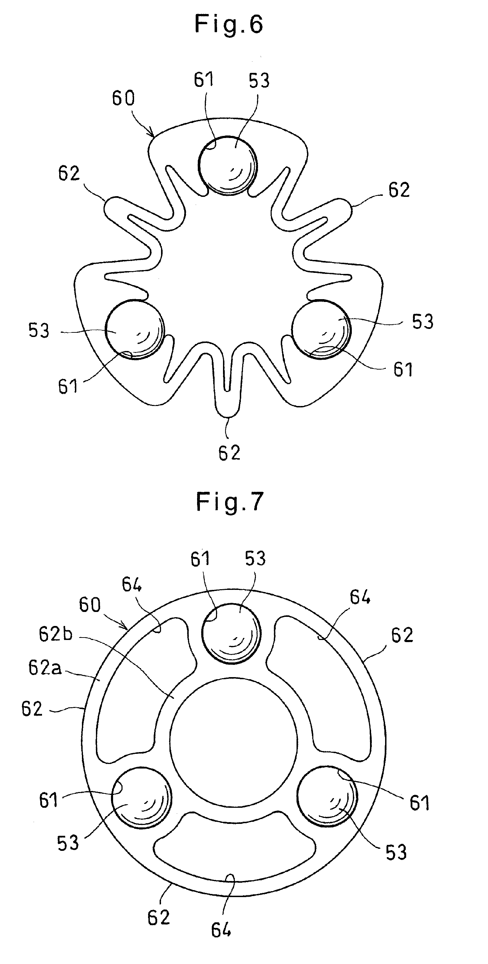

In Fig. 6, the cage 60 is structured such that the pillar sections 62 are in the shape of circumferentially extensible and contractible bellows having circumferential widths narrower than those of the portions forming the pockets 61, thereby imparting flexibility to the pillar sections 62.

In Fig. 7, the cage 60 is structured such that the pillar sections 62 have radial widths substantially equal to those of the portions forming the pockets 61, circumferentially elongated arc-shaped bored hole 64 are formed in the circumferential center portions of the pillar sections 62, and each pillar section 62 is divided into an outer peripheral pillar portion 62a and an inner peripheral pillar portion 62b so as to impart flexibility to the respective outer and inner peripheral pillar portions 62a and 62b.

Each of the bored holes 64 in Fig. 7, which is a circumferentially elongated arc-shaped bored hole, may be replaced by a plurality of bored holes 64 arranged in a ladder-like manner in order to adjust the flexibility of the pillar section 62, and the manner of forming the holes may be changed arbitrarily.

While, in the embodiments, the cage 60 is formed of a soft plastic resin, it may be formed of copper or aluminum.

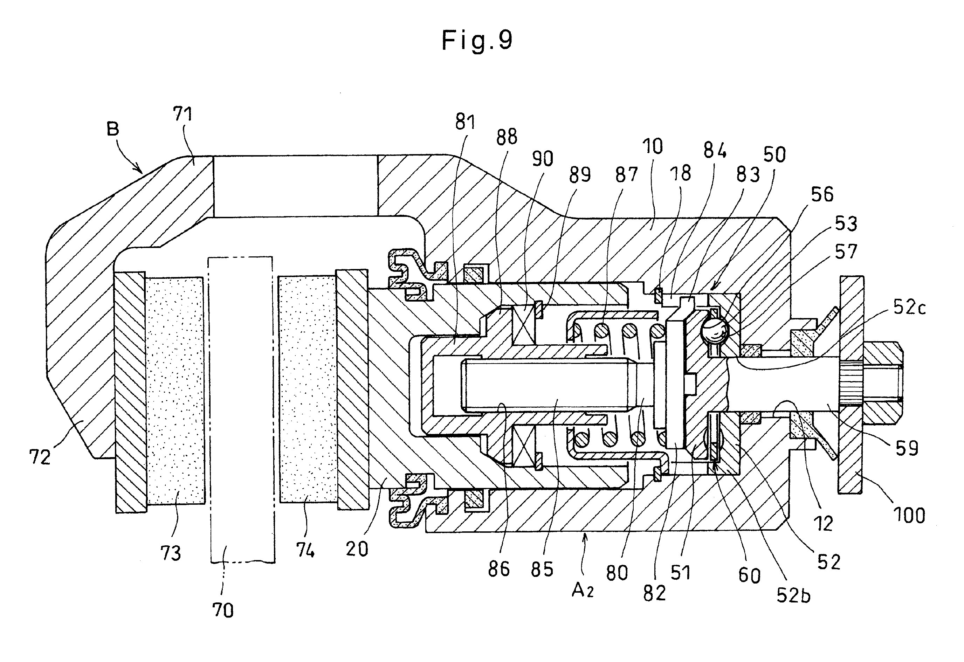

Fig. 9 illustrates a disc brake device equipped with the function of a parking brake. This disc brake device is different from the brake device illustrated in Fig. 8 in that instead of the electric linear motion actuator A1, a manual linear motion actuator A2 is provided on the other end of the caliper 71 and a braking force is applied to the disc rotor 70 by the operator manipulating the manual linear motion actuator A2. Thus, similar reference numerals are assigned to parts similar to those of the electric linear motion actuator A1 illustrated in Fig. 8, and the description thereof is omitted.

Like the electric linear motion actuator A1 illustrated in Fig. 1, the manual linear motion actuator A2 is configured such that it includes a cylinder 10 and a slidable piston 20 incorporated in the cylinder 10 and the piston 20 is moved toward the disc rotor 70 by supplying hydraulic oil into the closed end portion of the cylinder 10 so that the outboard brake pad 73 and the inboard brake pad 74 hold the outer peripheral portion of the disc rotor 70 therebetween from the opposite sides in the axial direction, thereby applying a braking force to the disc rotor 70.

A ball ramp mechanism 50, which converts a rotary motion into a linear motor, is incorporated in the closed end portion of the cylinder 10, and configured to press and move the piston 20 toward the disc rotor 70 via a push rod 80 and a tubular clutch member 81.

Like the ball ramp mechanism 50 illustrated in Fig. 2, the ball ramp mechanism 50 of this embodiment is configured such that: three opposed pairs of arc-shaped ramp grooves 56 and 57 are respectively provided in the opposing faces of the driving-side rotor 51 and the driven-side rotor 52 at uniform intervals in the circumferential direction; a ball 53 is incorporated between each of the three opposed pairs of ramp grooves 56 and 57; the balls 53 are retained by the cage 60 illustrated in Fig. 3; and the above driven-side rotor 52 is located at the closed end side of the cylinder 10.

Further, a cylindrical portion 52b is provided on the outer circumference of the driven-side rotor 52 to cover the driving-side rotor 51, and the open end of the cylindrical portion 52b is disposed in opposing relationship with a retaining ring 18 mounted on the inner circumference of the closed end portion of the cylinder 10 so that the driven-side rotor 52 is retained so as to be unmovable in the axial direction.

Further, a rod 59 is provided on the driving-side rotor 51, and inserted through a center hole 52c formed in the driven-side rotor 52 and through a shaft insertion hole 12 formed in the closed end portion of the cylinder 10. An operating member 100, which may be composed of a lever or the like, is mounted to the end portion of the rod 59 which is located outside the cylinder 10. The driving-side rotor 51 is rotated by manipulating the operating member 100 such as by the operator depressing a pedal or swinging a lever, and moved, while being rotated, in the axial direction by the movement of the ball 53 along the opposing paired ramp grooves 56 and 57, whereby the push rod 80 is pressed and moved in the axial direction.

The push rod 80 has a flange 82 on an end portion disposed in opposing relationship with the ball ramp mechanism 50. Provided on the outer circumference of the flange 82 is a protrusion 83 which is engaged in a rotation preventing groove 84 formed in the cylindrical portion 52b of the driven-side rotor 52 so that the push rod 80 is prevented from rotating due to the engagement of the protrusion 83 in the rotation preventing groove 84.

Further, the push rod 80 is provided with a threaded shaft portion 85 which is in threaded engagement in a threaded hole 86 formed in the clutch member 81.

An elastic force of a return spring 87 is applied to the flange 82 of the push rod 80 so as to cause the push rod 80 to be biased toward the driving-side rotor 51.

The clutch member 81 is mounted in the piston 20, and an adjust member 90 is incorporated between a flange 88 provided on the outer circumference of the clutch member 81 and a stop ring 89 mounted on the inner circumference of the piston 20. The adjust member 90 acts to cause the clutch member 81 to be moved, while being rotated, in the axial direction to follow the piston 20 by the threaded engagement with the threaded shaft portion 85 when the piston 20 is moved toward the disc rotor 70 by supplying hydraulic oil into the closed end portion of the cylinder 10, as described in Patent Document 3.

In the ball ramp mechanism 50 of the manual linear motion actuator A2 configured as above, as in the ball ramp mechanism 50 illustrated in Figs. 2 and 3, since flexibility is imparted to the pillar sections 62 of the cage 60 retaining the balls 53, dimensional variation of the ramp grooves 56, 57 due to manufacturing tolerance can be absorbed via elastic deformation of the pillar sections 62 so that a delay or advance in the motion of the ball 53 is permitted. Thus, a load can be transferred uniformly through each of the balls 53, while at the same time, damage at the contact portion between the balls 53 and the ramp grooves 56 and 57 can be prevented.

In the ball ramp mechanisms described in Patent Documents 1 to 3 cited as the background art, there is a problem such that since only one ball is disposed between each opposed pair of ramp grooves formed in the driving-side rotor and the driven-side rotor, the surface pressure at the contact portion between the ball and each of the ramp grooves is so high that abnormal wear or peeling is likely to occur in the contact portion, which reduces the load capacity and makes it impossible to generate a large thrust force.

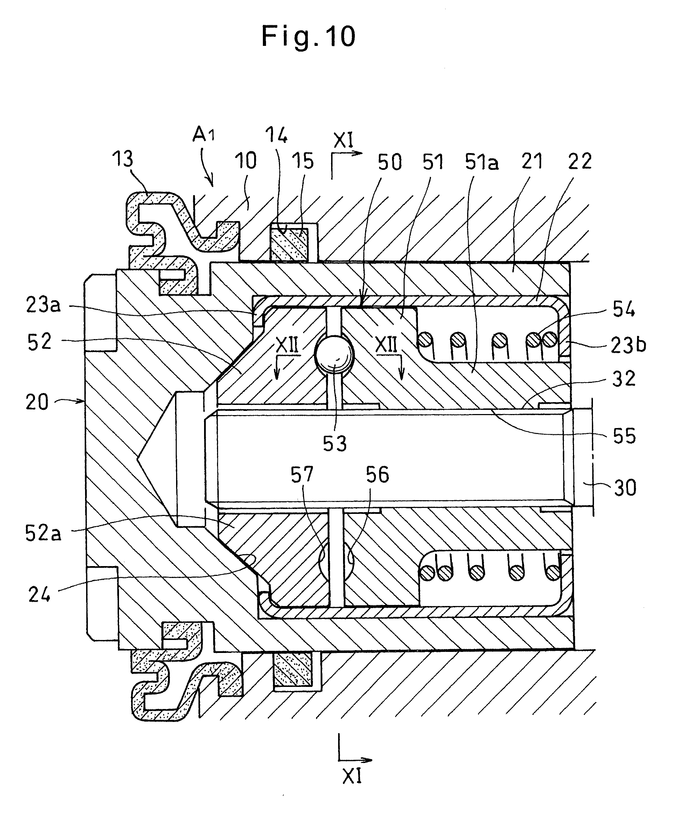

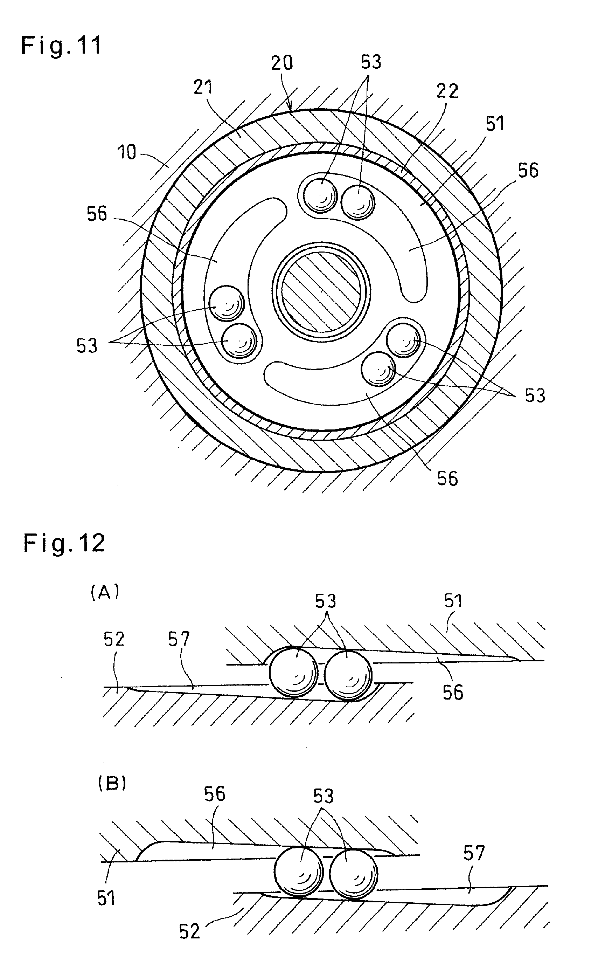

In order to solve the above problem, in the ball ramp mechanism of the linear motion actuator illustrated in Figs. 10 through 12 (A) and (B), a plurality of balls 53 are incorporated between each of the opposed pairs of ramp grooves 56 and 57.

When a thrust force is generated by relatively rotating the driving-side rotor 51 and the driven-side rotor 52 with, as described above, the plurality of balls 53 being incorporated between each opposed pair of ramp grooves 56 and 57, a load is transferred from each of the contact portions between the balls 53 incorporated in the ramp grooves 56 and 57 and the ramp grooves 56 and 57.

Thus, as compared with the ball ramp mechanism in which a load is transferred by a single ball 53, the surface pressure at the contact portions between the balls 53 and the ramp grooves 56 and 57 is decreased so that the load capacity is increased accordingly and thus a large thrust force can be generated. Meanwhile, when the load capacity remains the same, the ball ramp mechanism 50 can be small-sized and light-weighted.

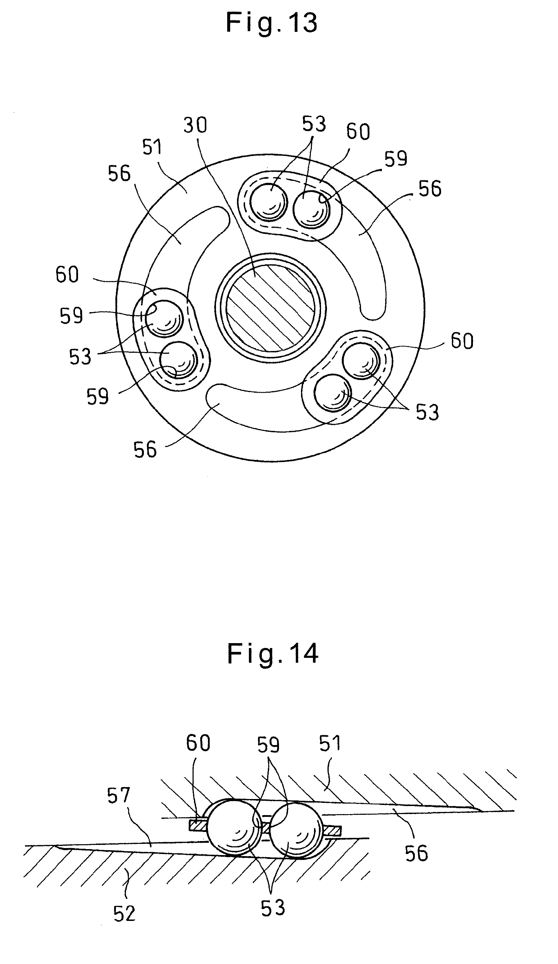

As illustrated in Figs. 13 and 14, with the plurality of balls 53 incorporated between each opposed pair of ramp grooves 56 and 57 being retained by the cage 60, the balls 53 can be prevented from rotating in frictional engagement in opposite directions, thereby it is possible to restrain a decrease in efficiency and prevent abnormal wear of the balls 53.

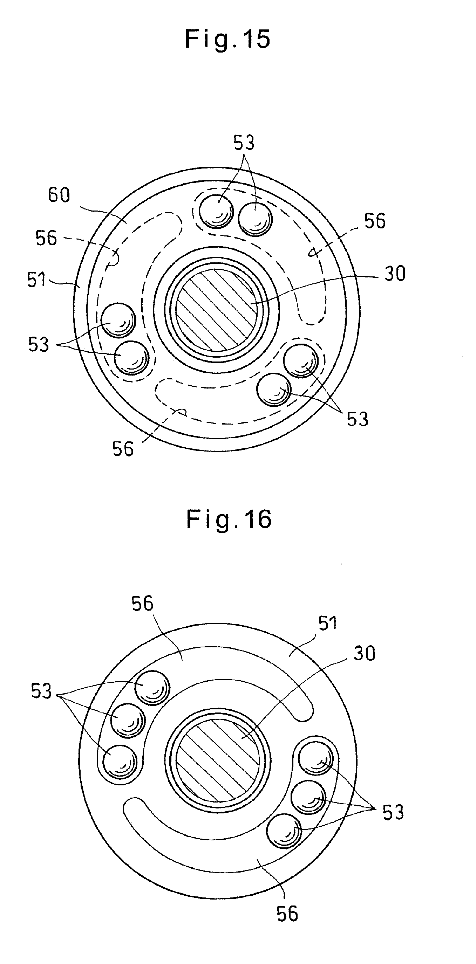

In Fig. 15, the cage 60 for retaining the balls 53 is configured in an annular shape, and all the six balls 53 are retained by the annular cage 60. With such a configuration in which all the balls 53 are retained by the single cage 58, the balls 53 can be prevented from being dispersed and falling down when assembled, thereby it is possible to assemble the ball ramp mechanism 50 with ease.

The cage 60 may be formed of a plastic, or may be formed of a metal.

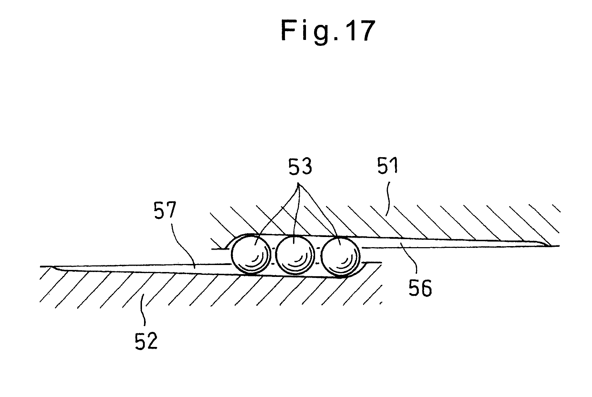

While, in Figs. 11 and 13, the number of the balls 53 incorporated between each opposed pair of ramp grooves 56 and 57 is set to two (2), the number of the balls 53 is not limited to two but may be two or more. The number of the balls may be three (3), for example, as illustrated in Figs. 16 and 17.

If two opposed pairs of ramp grooves 56 and 57 are provided on a common circumference as illustrated in Figs. 16 and 17, the circumferential length of each of the ramp grooves 56 and 57 can be increased, so that an equivalent axial stroke can be obtained even with a smaller lead angle, as compared with when three opposed pairs of ramp grooves 56 and 57 are provided. In this manner, the rotational drive force applied to the driving-side rotor 51 can be decreased so that the drive source can be power-saved and downsized.

Meanwhile, if two opposed pair of ramp grooves 56 and 57 are provided on one circumference, and if only one ball 53 is incorporated between each opposed pair of ramp grooves 56 and 57, a load is loaded on the balls at two positions, and hence if the load is an unbalanced load, the rotors 51 and 52 are tilted with respect to each other, as a result of which there is a possibility that the lead angle is changed so that a predetermined lead angle cannot be obtained. However, by incorporating a plurality of balls 53 between each opposed pair of ramp grooves 56 and 57, it is possible to reduce tilting of the rotors.

### Description of Reference Numerals

- A1: electric linear motion actuator
- A2: manual linear motion actuator
- B: electric disc brake device
- 10: cylinder
- 20: piston
- 30: drive shaft
- 40: electric motor
- 50: ball ramp mechanism
- 51: driving-side rotor
- 52: driven-side rotor
- 53: ball
- 56, 57: ramp groove
- 60: cage
- 61: pocket
- 62: pillar section
- 62a: outer peripheral pillar portion
- 62b: inner peripheral pillar portion
- 63: cutout
- 64: bored hole
- 70: disc rotor
- 73, 74: brake pad
- 80: push rod

## Claims

1. A ball ramp mechanism comprising:
a driving-side rotor and a driven-side rotor which are provided on a common axis in opposing relationship with each other, wherein a plurality of opposed pairs of circumferentially equidistantly spaced apart first and second arc-shaped ramp grooves are provided on opposing faces of the rotors, with depths of the ramp grooves being gradually changed in the circumferential direction and the direction of the change being made opposite between the first and second ramp grooves;
balls each incorporated between each of the opposed pairs of ramp grooves; and a cage having pockets for accommodating the balls and retaining the balls,
wherein the ball ramp mechanism is configured such that when the driving-side rotor and the driven-side rotor rotate relative to each other, the balls are moved along the respective ramp grooves such that the driving-side rotor and the driven-side rotor are relatively moved in an axial direction relative to each other, **characterized in that**:
pillar sections are defined between respective adjacent pairs of the pockets of the cage and flexibility is imparted to the pillar sections so as to make the pillar sections elastically deformable.

2. The ball ramp mechanism as claimed in claim 1, wherein cutout are formed in an inner circumference of each of the pillar sections to make radial widths of the pillar sections narrower than widths of portions of the cage where the pockets are formed, thereby imparting flexibility to the pillar sections.

3. The ball ramp mechanism as claimed in claim 1, wherein the pillar sections have radially inwardly curved shapes such that the pillar sections are smaller in radial width than portions of the cage where the pockets are formed, thereby imparting flexibility to the pillar sections.

4. The ball ramp mechanism as claimed in claim 1, wherein the pillar sections have the shape of bellows extensible and contractible in the circumferential direction such that the pillar sections are smaller in radial width than portions of the cage where the pockets are formed, thereby imparting flexibility to the pillar sections.

5. The ball ramp mechanism as claimed in claim 1, wherein a bored hole is formed in a widthwise center portion of each of the pillar sections so as to divide the pillar section into an outer peripheral pillar portion and an inner peripheral pillar portion, thereby imparting flexibility to the pillar sections.

6. An electric linear motion actuator comprising a cylinder, a piston that is slidable along an inside diameter surface of the cylinder, a drive shaft that configured to be rotationally driven by an electric motor serving as a drive source, and a ball ramp mechanism that converts a rotary motion of the drive shaft into a linear motion so as to press the piston,
wherein the ball ramp mechanism comprises the ball ramp mechanism as set forth in any one of claims 1 to 5.

7. A manual linear motion actuator comprising a cylinder, a piston that is slidable along an inside diameter surface of the cylinder, a push rod arranged coaxial with the piston so as to push the piston, and a ball ramp mechanism that is incorporated in back of the push rod and configured to convert an input rotation via manipulation by an operator into a linear motion so as to press the push rod,
wherein the ball ramp mechanism comprises the ball ramp mechanism as set forth in any one of claims 1 to 5.

8. An electric disc brake device comprising an electric linear motion actuator, a disc rotor rotatable together with a wheel, and a brake pad configured to be linearly driven by the electric liner motion actuator, and pressed against the disc rotor, thereby applying a braking force to the disc rotor,
wherein the electric linear motion actuator comprises the electric linear motion actuator as set forth in claim 6.
